# EUROPÄISCHE PATENTANMELDUNG

(11) **EP 1 669 533 A2**
(43) Veröffentlichungstag der Anmeldung: **14.06.2006**
(21) Anmeldenummer: 05111746.3
(22) Anmeldetag: 06.12.2005
(51) Int. Cl.: E06B 3/22, E06B 1/60

(54) **Befestigung für einen Beschlag**

(30) Priorität: 08.12.2004 DE 202004019037 U
(71) Anmelder: SFS intec Holding AG, 9435 Heerbrugg (CH)
(72) Erfinder: Sieber, Alex, 9434, Au (CH)

(57) **Zusammenfassung**

Eine Befestigung für einen Beschlag (7) an einem mit mehreren Kammern versehenen Hohlprofil (4) wird mittels einer mit einem Antriebsende (5) und einem auf dem Schaft angebrachten Gewinde versehenen Schraube (1) vorgenommen. Die Schraube (1) weist zwei Gewindeabschnitte (2, 3) auf. Der vordere Gewindeabschnitt (2) greift in das Hohlprofil (4) und in eine Armierung (13) und der andere, dem Antriebsende (5) der Schraube (1) zugewandte, hintere Gewindeabschnitt (3), in die Wandung einer Durchgangsbohrung (6) am Beschlag (7), Bauteil od. dgl. ein.

## Beschreibung

Die Erfindung betrifft eine Befestigung für einen Beschlag, Bauteil od. dgl. an einem mit mehreren Kammern versehenen und mit einer Armierung ausgestatteten Kunststoffhohlprofil mittels einer mit einem Antriebsende und einem auf dem Schaft angebrachten Gewinde versehenen Schraube.

Befestigungen von Beschlägen mit Schrauben an Hohlprofilen der eingangs genannten Art sind für diverse Anwendungen bekannt. Die Funktion des Beschlages auf dem Hohlprofil wird in der Regel dadurch über längere Zeit beeinträchtigt, dass die Tür oder das Fenster die Verbindung stark beansprucht und insbesondere Hohlprofile aus Kunststoff od. dgl. mit mehreren Kammern über längere Zeit oder durch Wärmeeinflüsse und/oder Alterung in der Form instabil werden. Das Hohlprofil kann, insbesondere wenn es mehrere Kammern zwischen der Armierung und dem Beschlag aufweist, leicht deformiert werden.

Aufgabe der Erfindung ist das Fixieren eines Beschlages, Bauteils od. dgl. an der Armierung eines Hohlprofils in einem definierten Abstand, so dass dazwischen liegende Kammern des Hohlprofils von der Traglast der Tür oder des Fensters entlastet sind.

Dies gelingt erfindungsgemäß dadurch, dass eine Schraube mit zwei Gewindeabschnitten eingesetzt wird, wobei der vordere Gewindeabschnitt in das Hohlprofil eingreift und der andere, dem Antriebsende der Schraube zugewandte hintere Gewindeabschnitt in die Wandung einer Durchgangsbohrung am Beschlag, Bauteil od. dgl. eingreift. Durch die erfindungsgemäße Befestigung wird erreicht, dass das Hohlprofil weder bei der Montage des Beschlages noch später deformiert und somit die Position des Beschlages verändert wird. Dadurch ist die Funktion des Bandes zu jeder Zeit gegeben.

Durch die abstandfixierte Verbindung zwischen der Armierung von Kunststoffprofilen und Beschlag wird die Instabilität des Kunststoffprofils für die Verbindung unwichtig, da sich der Beschlag in einem fixierten Abstand zur Armierung hält. Durch das zweite Gewinde, das in der Wandung der Durchgangsbohrung am Beschlag eingreift, wird verhindert, dass sich der Beschlag beim Anschrauben am Hohlprofil von diesem entfernen kann. Der Abstand zwischen Armierung und Beschlag wird für die Montage fixiert und behält die Position in montiertem Zustand auch über viele Jahre bei. Die Tür oder das Fenster behält die Öffnungs- und Schließfunktion bei.

In einer Ausgestaltung der Befestigung können die beiden Gewindeabschnitte der Schraube kontinuierlich ineinander übergehen. Durch den kontinuierlichen Übergang des vorderen Gewindeabschnittes in den hinteren Gewindeabschnitt wird mit einem minimal ansteigenden Gewindeformmoment der Effekt der Fixierung der Schraube an der Wandung der Durchgangsbohrung am Beschlag erreicht. Ein kontinuierlicher Gewindeübergang kann auch fertigungstechnisch mit kleinem Aufwand hergestellt werden.

In einer weiteren Ausgestaltung der Befestigung ist zwischen den beiden Gewindeabschnitten der Schraube ein gewindefreier Abschnitt vorgesehen. Durch die Trennung der beiden Gewindeabschnitte durch einen gewindefreien Abschnitt kann erreicht werden, dass fertigungstechnisch mehr Möglichkeiten offen gelassen werden. So kann zum Beispiel auch mit anderen Maßen als dem Außendurchmesser variiert werden. Beispielsweise ist dies notwendig, wenn die Volumen, die durch die Schaftdurchmesser der beiden Gewindeabschnitte vor dem Gewindewalzen bestimmt sind, durch die Art der Gewinde und der gewählten Gewindedurchmesser über ein gewisses Maß abweichen.

In einer weiteren Ausgestaltung der Befestigung ist der hintere Gewindeabschnitt an dem dem Antriebsende zugewandten Ende der Schraube bis in den dort ausgebildeten Schraubenkopf ausgeformt. Selbst kurze Durchgangsbohrungen im Beschlag reichen somit aus, um den erfinderischen Effekt des Haltens des definierten Abstandes zwischen Armierung und dem Beschlag sicherzustellen.

In einer weiteren Ausgestaltung der Befestigung weist der hintere Gewindeabschnitt an dem dem Antriebsende zugewandten Ende der Schraube einen um 0 - 20 % größeren Außendurchmesser als der dem freien Ende der Schraube zugewandte vordere Gewindeabschnitt auf. Bereits eine geringe Änderung des Außendurchmessers des hintern Gewindeabschnittes reicht aus, um in genügender Tiefe an der Wandung der Durchgangsbohrung am Beschlag geführt den Abstand zum Hohlprofil zu definieren. Größere Außendurchmesser haben dieselbe Wirkung, erhöhen aber das Eingewinden-Moment beim Montieren. Wird der hintere Gewindeabschnitt mit einem um 0 bis 20 % größeren Außendurchmesser ausgeführt, wird nur in geringem Maße mehr Material, insbesondere im Bereich der Schweißnaht, benötigt. Größere Durchmesser des hinteren Gewindeabschnittes sind technisch problemlos herstellbar, wirken aber weniger filigran.

In einer weiteren Ausgestaltung der Befestigung weist der hintere Gewindeabschnitt an dem dem Antriebsende zugewandten Ende der Schraube eine asymmetrische Gewindeform auf. Durch das Ändern eines oder beider Flankenwinkel kann das Auszugsmoment zwischen Schraube und Beschlag erhöht werden. Die Schraube wird mit mehr Kraft während des Eingewindens gegen das Hohlprofil gezogen. Durch das erhöhte Gewindeformmoment wird ebenfalls erreicht, dass die Bohrdrehzahl des Schraubers gegen Ende des Setzvorganges reduziert und dadurch ein genauerer Abschaltzeitpunkt ermöglicht wird. Mit dem genaueren Abschaltzeitpunkt wird das Setzen des Beschlages am Hohlprofil in der Tiefe genauer positioniert und somit eine reproduzierbarere Lage zwischen der Armierung des Hohlprofils und des Beschlages erreicht.

In einer weiteren Ausgestaltung weist mindestens ein Gewindeabschnitt der Schraube eine unrunde, z.B. trilobulare Gewindeform auf. Die Schraube kann so an einem oder beiden Gewindeabschnitten mit einem selbstformenden Gewinde ausgestattet werden. Gewinde mit einem unrunden, z.B. trilobularen Gewinde eignen sich besonders, um hohe Kräfte an die zu formende Gewindeseite zu übertragen.

In einer weiteren Ausgestaltung der Befestigung weist der hintere Gewindeabschnitt eine unrunde, z.B. trilobulare Gewindeform auf. Damit wird erreicht, dass ein tieferes Einkerben in die Wandung der Durchgangsbohrung des Beschlages durch den hinteren Gewindeabschnitt erfolgt. Gegenüber einem metrischen ISO-Gewinde ist die trilobulare Gewindeform besser geeignet, um ein Gewinde in der Wandung der Durchgangsbohrung des Schaftes zu formen, da partiell größere Formkräfte möglich sind.

In einer weiteren Ausgestaltung der Befestigung weist der hintere Gewindeabschnitt die gleiche Steigung wie der vordere Gewindeabschnitt auf. Liegt der Beschlag beim Start des Setzvorganges auf dem Hohlprofil abstandsfrei auf, reicht es, dass der hintere Gewindeabschnitt mit derselben Steigung wie der vordere Gewindeabschnitt versehen ist. Durch das Eingreifen des hinteren Gewindeabschnittes in der Wandung der Durchgangsbohrung des Beschlages wird der Beschlag beim Setzen im gleichen Abstand zwischen Beschlag und Hohlprofil gehalten, der bereits am Anfang des Setzvorganges vorhanden war.

In einer weiteren Ausgestaltung der Befestigung weist der hintere Gewindeabschnitt eine größere Steigung auf als der vordere Gewindeabschnitt. Wird das Hohlprofil vor dem Start des Setzvorganges durch irgendwelche Einflüsse zusammengedrückt, ist es erfindungsgemäß möglich, den Abstand zwischen Armierung und Beschlag durch eine größere Gewindesteigung am hinteren Gewindeabschnitt durch den Setzvorgang wieder in den unverformten Zustand des Hohlprofils zu entlasten. Trotzdem liegt der Beschlag schlüssig am Hohlprofil auf.

In einer weiteren Ausgestaltung der Befestigung weist der hintere Gewindeabschnitt eine kleinere Steigung auf als der vordere Gewindeabschnitt. Durch leichte Verformungen am Hohlprofil oder durch andere Einflüsse kann der Beschlag beim Start des Setzvorgangs einen geringen Abstand zur Armierung des Hohlprofils aufweisen. Ist dieser Abstand im Mittel immer etwa gleich groß, kann durch eine geringere Steigung am hinteren Gewindeabschnitt erreicht werden, dass der Beschlag beim Setzen näher an das Hohlprofil herangezogen wird, so dass in angezogenem Zustand der Beschlag dicht am Hohlprofil aufliegt.

In einer weiteren Ausgestaltung der Befestigung ist mindestens ein Teil eines Gewindeabschnittes mit einer klebenden, klemmenden oder einer anderen selbsthemmenden Beschichtung od. dgl. versehen. Damit kann erreicht werden, dass bei Anwendungen, die hohen dynamischen Belastungen wie Vibrationen od. dgl. ausgesetzt sind, die Befestigung sich in keinem Fall selbst lösen kann.

In einer weiteren Ausgestaltung der Befestigung weist die Schraube eine Schraubenspitze auf, die als Eindringspitze, Bohrspitze od. dgl. ausgebildet ist. Mit dieser Ausführungsvariante wird beim Setzen ein einfacheres Zentrieren möglich. Beim Vorbohren kann ein Bohrer mit deutlich kleinerem Durchmesser verwendet werden. Dadurch wird eine formschlüssigere Verbindung zwischen Schraube und Hohlprofil erreicht. Das höhere Gewindemoment beim Setzen führt aber auch zu einem höheren Rückdrehmoment und somit zu einer Verbesserung der Rückdrehsicherung. Ein wirtschaftlicheres und genaueres Setzen sind die Vorteile, die sich ergeben.

In einer weiteren Ausgestaltung der Befestigung ist die Schraubenspitze selbstbohrend, lochformend od. dgl. ausgeführt. Mit dieser selbstbohrenden Ausführungsvariante kann der Arbeitsschritt des Vorbohrens entfallen. Ein wirtschaftlicheres und genaueres Setzen sind die Vorteile, die sich ergeben.

In einer weiteren Ausgestaltung der Befestigung ist mindestens ein Gewindeabschnitt mit einem schneidenden oder selbstformenden Gewinde ausgestaltet. Der Arbeitsgang des Gewindeschneidens kann so entfallen. Das Gewinde bildet so eine formschlüssige Verbindung mit dem Hohlprofil.

In einer weiteren Ausgestaltung der Befestigung weist die Schraube ein Gewinde, das bis in die Schraubenspitze ausläuft, auf. Hohlprofile aus Kunststoff od. dgl. mit geringer Armierung können so ohne Bohrspitze durchdrungen werden.

In einer weiteren Ausgestaltung der Befestigung ist die Schraubenspitze mit einer Bohrplatte ausgestattet. Die Bohrplatte kann dadurch auf die zu durchbohrenden Armierungen ausgelegt werden, während der Schraubenschaft mit einem anderen Werkstoff hergestellt werden kann. Für den Bohrvorgang ist meist ein höherwertiger Werkstoff einzusetzen. Es können daher für den Schaft günstigere Werkstoffe eingesetzt werden. Unter anderem kann dadurch der Prozess der Wärme- und Oberflächenbehandlung des Schraubenschaftes vereinfacht werden.

In einer weiteren Ausgestaltung der Befestigung ist die Schraube aus rostfreiem Material hergestellt. Für korrosionsgefährdete Anwendungen kann die Schraube aus rostfreiem Material gefertigt werden.

In einer weiteren Ausgestaltung der Befestigung ist die Schraube aus einem nichteisenmetallischen oder nichtmetallischen Material wie Composite-Material od. dgl. hergestellt. Insbesondere kann eine Schraube aus nichtmetallischem Material hergestellt sein, wenn die Bohrspitze aus einem anderen Material oder mittels einer Bohrplatte ausgeführt ist.

Ausführungsbeispiele der Erfindung werden im Folgenden unter Bezugnahme auf die Zeichnung näher erläutert. Es zeigt:
- Fig. 1: eine spaltfreie Befestigung eines Beschlages an einem mehrkammerigen, armierten Hohlprofil;
- Fig. 2: eine spaltfreie Befestigung eines Beschlages an einem mehrkammerigen-Hohlprofil, wobei die Schraube das Armierungsprofil zweimal durchdringt;
- Fig. 3: einen Schnitt nach der Linie III - III in Fig. 2.

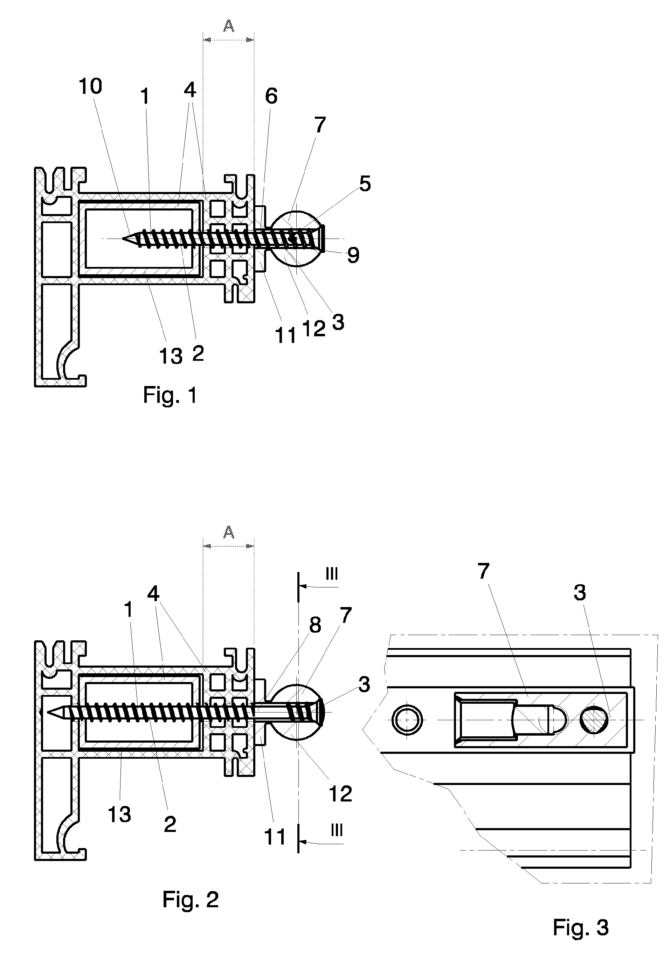

Eine in Fig. 1 dargestellte Befestigung zeigt einen Beschlag 7 und ein mit mehreren Kammern versehenes armiertes Hohlprofil 4 aus Kunststoff, das mit einer mit einem Antriebsende und einem auf dem Schaft angebrachten Gewinde versehenen Schraube montiert ist. Die Schraube 1 weist zwei Gewindeabschnitte 2,3 vorzugsweise mit verschiedenen Gewindedurchmessern auf. Der eine, im Durchmesser kleinere vordere Gewindeabschnitt 2 greift in die Armierung des Hohlprofils 4 ein. Der größere Durchmesser an dem dem Antriebsende 5 der Schraube 1 zugewandte hinteren Gewindeabschnitt 3 greift in die Wandung einer Durchgangsbohrung 6 am Beschlag 7 ein. Die zwei Gewindeabschnitte 2,3 der Schraube gehen kontinuierlich ineinander über. Der Übergang der beiden Gewindeabschnitte wird so festgelegt, dass dieser möglichst sicherstellt, dass der vordere Gewindeabschnitt 2 mindestens im Bereich der Armierung 13 des Hohlprofils 4 und der hintere Gewindeabschnitt im Bereich des Beschlages 7 liegt. So wird eine maximale Wirkung bezüglich Halten des Abstandes A zwischen Armierung 13 und Beschlag 7 erreicht. Der Gewindeabschnitt 3 an dem dem Antriebsende 5 zugewandten Ende der Schraube 1 weist vorzugsweise einen um 0 - 20 % größeren Außendurchmesser als der dem freien Ende der Schraube 1 zugewandte vordere Gewindeabschnitt 2 auf. Es ist auch möglich, den hinteren Gewindeabschnitt 3 mit einem kleineren Gewindedurchmesser als der vordere Gewindeabschnitt 2 auszugestalten. Je größer der Durchmesser des hinteren Gewindeabschnittes 3 ist, umso breiter muss die Schweissung zwischen Grundplatte 11 und Hülsenteil 12 des Beschlages ausgeführt sein, um sicherzustellen, dass die Durchgangsbohrung im Beschlag nicht an der Schweissstelle eine Öffnung aufweist. Der hintere Gewindeabschnitt 3 kann auch mit einer unrunden, z.B. trilobularen Gewindeform ausgeführt sein. Damit lassen sich bessere Gewindeform- und Rückdrehwerte der Befestigung erreichen.

Der hintere Gewindeabschnitt 3 kann die gleiche Steigung wie der vordere Gewindeabschnitt 2 aufweisen. Versuche haben gezeigt, dass mit derselben Steigung in beiden Gewindeabschnitten 2,3 die besten Resultate in Bezug auf den erfinderischen Effekt, nämlich das Halten des definierten Abstandes A zwischen Armierung 13 und Beschlag 7, Bauteil, od. dgl., erreicht werden können. Voraussetzung dazu ist, dass bei der Montage das Hohlprofil 4 und der Beschlag 7 zueinander fixiert sind und in diesem Zustand die Schraube 1 die beiden Komponenten definitiv verbindet. Wird die Fixierung der beiden Komponenten nicht durchgeführt, kann durch den Montagevorgang eine Änderung des gewünschten Abstandes eintreten. Das heißt, dass der Abstand A zwischen Beschlag 7 und der Armierung 13 im Hohlprofil 4 vor der Montage nicht immer gleich ist. Ist dieser Abstand A vor der Montage größer, wäre eine geringere Steigung am hinteren Gewindeabschnitt 3 vorteilhaft, da in diesem Falle der Beschlag 7 beim Eindrehen der Schraube 1 an das Hohlprofil gezogen würde. Die Praxis hat aber gezeigt, dass keine ideale Gewindesteigung dazu definiert werden kann. Die Schraube 1 kann auch eine Schraubenspitze 10 aufweisen, die als Eindringspitze, Bohrspitze od. dgl. ausgebildet ist.

In einer Ausführungsvariante gemäß Fig. 2 ist die Befestigung so ausgeführt, dass zwischen den zwei Gewindeabschnitten 2,3 der Schraube 1 ein gewindefreier Abschnitt 8 angebracht ist. Der gewindefreie Abschnitt 8 wird vorteilhaft identisch mit dem Pressdurchmesser des vorderen Gewindeabschnittes 2 ausgelegt und sollte nicht größer als der Außendurchmesser des vorderen Gewindeabschnittes 2 sein. Die Schweißverbindung zwischen Grundplatte 11 und dem Hülsenteil 12 kann so in einer minimalen Ausprägung sehr filigran ausgeführt werden. Der hintere Gewindeabschnitt 3 an dem dem Antriebsende zugewandten Ende der Schraube 1 ist bis in den dort ausgebildeten Schraubenkopf 9 ausgeformt. Erfindungsgemäß kann so auch ein Beschlag 7 mit kurzen Durchgangsbohrungen befestigt werden. Der hintere Gewindeabschnitt 3 kann die kleinere Steigung aufweisen als der vordere Gewindeabschnitt 2. Diese Ausprägung macht insbesondere dann Sinn, wenn der Beschlag 7 während des Montagevorganges an das Hohlprofil herangezogen werden muss, um den idealen Abstand A zu erreichen. In der Praxis kann nur mit einer Schätzung der Steigung gearbeitet werden, da der Abstand vor der Montage nur bei einer Fixierung konstant ist. Die Schraube 1 kann auch aus rostfreiem Material hergestellt sein. Im Weiteren kann die Schraube 1 auch aus einem nichteisenmetallischen oder nichtmetallischen Material wie Composite-Material od. dgl. hergestellt sein.

In einer weiteren Ausführungsvariante zeigt Fig. 3 eine Befestigung mit mindestens einem Gewindeabschnitt 2,3 der Schraube 1, der eine unrunde, z.B. trilobulare od. dgl.

Gewindeform aufweist. Damit kann eine bessere Rückdrehsicherung insbesondere im Hohlprofil 4 und in der Armierung 13 erreicht werden.

Ferner wird vorgeschlagen, dass die Befestigung am hinteren Gewindeabschnitt 3 an dem dem Antriebsende 5 zugewandten Ende der Schraube 1 eine asymmetrische Gewindeform aufweist. Diese asymmetrische Gewindeform führt zu einer Art klemmen im bereits durch den vorderen Gewindeabschnitt 2 vorgeformten Gewinde in der Durchgangsbohrung des Beschlages 7.

Als weitere Variante wird vorgeschlagen, die Befestigung so auszugestalten, dass der hintere Gewindeabschnitt 3 die größere Steigung aufweist als der vordere Gewindeabschnitt 2. Das Hohlprofil 4 kann bereits beim Auflegen des Beschlages nach innen gebogen sein, so dass durch eine größere Steigung am hinteren Gewindeabschnitt 3 wieder der ursprüngliche, optimale Abstand A hergestellt wird. Die Gewindesteigung muss aber exakt auf die Eigenschaften dieser Verbindung abgestimmt sein, was sich in der Praxis als schwierig erweist.

Als weitere Variante wird vorgeschlagen, mindestens einen Teil eines Gewindeabschnittes 2,3 mit einer klebenden, klemmenden oder einer anderen selbsthemmenden Beschichtung od. dgl. zu versehen, um die Rückdrehsicherheit insbesonders bei dynamisch beanspruchten Verbindungen zu erhöhen. Dies können Anwendungen sein, die einer Umgebung ausgesetzt sind, die ständig oder mindestens überdurchschnittlich vielen schwingenden Belastungen ausgesetzt sind.

Weiter wird vorgeschlagen, die Schraubenspitze 10 selbstbohrend, lochformend od. dgl. auszuführen um einen Arbeitsgang in den Montagevorgang zu integrieren und so eine wirtschaftlichere Lösung zu realisieren.

Weiter wird vorgeschlagen, mindestens ein Gewindeabschnitt 2,3 mit einem schneidenden oder selbstformenden Gewinde auszugestalten. Dies reduziert um einen weiteren Arbeitschritt während der Montage und stellt auch noch sicher, dass eine möglichst formschlüssige Verbindung entsteht.

Weiter wird vorgeschlagen, ein Gewinde, das bis in die Schraubenspitze 10 ausläuft, zu verwenden, wenn nur eine dünnwandige Armierung 13 im Hohlprofil 4 vorhanden ist. Selbst ohne ausgeprägte Bohrspitze ist eine so gestaltete Schraubenspitze 10 in der Lage dünne Armierungen 13 od. dgl. zu durchdringen.

In einer weiteren Ausführung ist die Schraubenspitze 10 mit einer Bohrplatte ausgestattet. Dies wiederum ist sinnvoll, wenn sehr dicke oder hochwertigere Armierungen 13 im Hohlprofil 4 eingesetzt werden.

### Zusammenfassung:

Gemäß Fig. 1 wird eine Befestigung für einen Beschlag 7 an einem mit mehreren Kammern versehenen Hohlprofil 4 mittels einer mit einem Antriebsende 5 und einem auf dem Schaft angebrachten Gewinde versehenen Schraube 1 vorgenommen. Die Schraube 1 weist zwei Gewindeabschnitte 2, 3 auf. Der vordere Gewindeabschnitt 2 greift in das Hohlprofil 4 und in eine Armierung 13 und der andere, dem Antriebsende 5 der Schraube 1 zugewandte, hintere Gewindeabschnitt 3, in die Wandung einer Durchgangsbohrung 6 am Beschlag 7, Bauteil od. dgl. ein.

## Patentansprüche

1. Befestigung für einen Beschlag, Bauteil od. dgl. an einem mit mehreren Kammern versehenen und mit einer Armierung ausgestatteten Kunststoffhohlprofil od. dgl. mittels einer mit einem Antriebsende und einem auf dem Schaft angebrachten Gewinde versehenen Schraube, **dadurch gekennzeichnet, dass** eine Schraube (1) mit zwei Gewindeabschnitten (2, 3) eingesetzt ist, wobei der vordere Gewindeabschnitt (2) in das Hohlprofil (4) eingreift und der andere, dem Antriebsende (5) der Schraube (1) zugewandte, hintere Gewindeabschnitt (3) in die Wandung einer Durchgangsbohrung (6) am Beschlag (7), Bauteil od. dgl. eingreift.

2. Befestigung nach Anspruch 1, **dadurch gekennzeichnet, dass** die zwei Gewindeabschnitte (2,3) der Schraube kontinuierlich ineinander übergehen.

3. Befestigung nach Anspruch 1, **dadurch gekennzeichnet, dass** zwischen den zwei Gewindeabschnitten (2,3) der Schraube ein gewindefreier Abschnitt (8) vorgesehen ist.

4. Befestigung nach einem der Ansprüche 1 bis 3, **dadurch gekennzeichnet, dass** der hintere Gewindeabschnitt (3) an der dem Antriebsende zugewandten Ende der Schraube (1) bis in den dort ausgebildeten Schraubenkopf (9) ausgeformt ist.

5. Befestigung nach einem der Ansprüche 1 bis 4, **dadurch gekennzeichnet, dass** der hintere Gewindeabschnitt (3) an der dem Antriebsende (5) zugewandten Ende der Schraube einen um 0 - 20% größeren Aussendurchmesser als der dem freien Ende der Schraube (1) zugewandte vordere Gewindeabschnitt (2) aufweist.

6. Befestigung nach einem der Ansprüche 1 bis 5, **dadurch gekennzeichnet, dass** der hintere, dem Antriebsende (5) zugewandte Gewindeabschnitt (3) eine asymmetrische Gewindeform aufweist.

7. Befestigung nach einem der Ansprüche 1 bis 5, **dadurch gekennzeichnet, dass** mindestens ein Gewindeabschnitt (2,3) der Schraube eine unrunde, z.B. trilobulare Gewindeform aufweist.

8. Befestigung nach einem der Ansprüche 1 bis 7, **dadurch gekennzeichnet, dass** der hintere Gewindeabschnitt (3) eine unrunde, z.B. trilobulare Gewindeform aufweist.

9. Befestigung nach Anspruch 1, **dadurch gekennzeichnet, dass** der hintere Gewindeabschnitt (3) die gleiche Steigung wie der vordere Gewindeabschnitt (2) aufweist.

10. Befestigung nach Anspruch 1, **dadurch gekennzeichnet, dass** der hintere Gewindeabschnitt (3) eine größere Steigung aufweist als der vordere Gewindeabschnitt (2).

11. Befestigung nach Anspruch 1, **dadurch gekennzeichnet, dass** der hintere Gewindeabschnitt (3) eine kleinere Steigung aufweist als der vordere Gewindeabschnitt (2).

12. Befestigung nach Anspruch 1, **dadurch gekennzeichnet, dass** mindestens ein Teil eines Gewindeabschnittes (2, 3) mit einer klebenden, klemmenden oder einer anderen selbsthemmenden Beschichtung od. dgl. versehen ist.

13. Befestigung nach Anspruch 1, **dadurch gekennzeichnet, dass** die Schraube (1) eine Schraubenspitze (10) aufweist, welche als Eindringspitze, Bohrspitze od. dgl. ausgebildet ist.

14. Befestigung nach Anspruch 1, **dadurch gekennzeichnet, dass** die Schraubenspitze (10) selbstbohrend, lochformend od. dgl. ausgeführt ist.

15. Befestigung nach Anspruch 1, **dadurch gekennzeichnet, dass** mindestens ein Gewindeabschnitt (2, 3) mit einem schneidenden oder selbstformenden Gewinde ausgestaltet ist.

16. Befestigung nach den Ansprüchen 13 und 14, **dadurch gekennzeichnet, dass** die Schraube (1) ein Gewinde, das bis in die Schraubenspitze (10) ausläuft, aufweist.

17. Befestigung nach den Ansprüchen 13 und 14, **dadurch gekennzeichnet, dass** die Schraubenspitze (10) mit einer Bohrplatte ausgestattet ist.

18. Befestigung nach einem der Ansprüche 1 bis 17, **dadurch gekennzeichnet, dass** die Schraube (1) aus rostfreiem Material hergestellt ist.

19. Befestigung nach einem der Ansprüche 1 bis 18, **dadurch gekennzeichnet, dass** die Schraube (1) aus einem nichteisenmetallischen oder nichtmetallischen Material wie Composite-Material od. dgl. hergestellt ist.
